# EUROPÄISCHE PATENTANMELDUNG

(11) **EP 1 607 671 A2**
(43) Veröffentlichungstag der Anmeldung: **21.12.2005**
(21) Anmeldenummer: 05012631.7
(22) Anmeldetag: 13.06.2005
(51) Int. Cl.: F16L 27/08, F16L 27/108, F16L 27/04

(54) **Verbindungskörper für Kraftfahrzeuge**

(30) Priorität: 14.06.2004 DE 102004028450
(71) Anmelder: Behr GmbH & Co. KG, 70469 Stuttgart (DE)
(72) Erfinder: Harich, Martin, 71638 Ludwigsburg (DE)

(57) **Zusammenfassung**

Die Erfindung betrifft eine Vorrichtung zum Verbinden wenigstens zweier Strömungswege eines Fluids für Kraftfahrzeuge. Solch eine Vorrichtung weist wenigstens jeweils einen in Längsrichtung entlang einer Mittelachse (30,31) fluiddurchströmten Zuführungsabschnitt und Abführungsabschnitt auf. Ferner ist wenigstens ein Verbindungskörper (21) vorgesehen, der wenigstens zwei zueinander anschließende, fluiddurchströmte Teilkörper (22,23) aufweist, die wenigstens abschnittsweise im wesentlichen axial zwischen wenigstens dem Zuführungsabschnitt und/oder dem Abführungsabschnitt angeordnet sind. Die Vorrichtung ist dadurch gekennzeichnet, dass die durch den Zuführungsabschnitt und den Abführungsabschnitt sich erstreckende Mittelachsen (30,31) in einem vorgegebenen Bereich voneinander getrennt ausgelenkt werden können.

## Beschreibung

Die vorliegende Erfindung betrifft Vorrichtungen zum Verbinden wenigstens zweier Strömungswege eines Fluids in einem Kraftfahrzeug.

Verbindungssysteme für Strömungswege sind im Stand der Technik bekannt, wobei diese beispielsweise in Kühlmittelkreisläufen eines Kraftfahrzeuges verwendet werden, um einzelne Komponenten des Kühlmittelkreislaufes miteinander zu verbinden.

Ausgangspunkt hierfür ist, dass Antriebsmotore heute üblicherweise mit einem flüssigen Kühlmittel, welches bevorzugt einen hohen Wasseranteil aufweist, gekühlt werden. Solche Kühlmittelkreisläufe eines Kraftfahrzeuges bestehen vorzugsweise im wesentlichen aus einer Wärmequelle wie beispielsweise dem Verbrennungsmotor, einer Pumpe zum Umwälzen des Kühlmittels, einem Kühler um Wärme abzuführen und Verbindungsleitungen zwischen den einzelnen Komponenten des Kühlmittelkreislaufes.

Während des Fahrbetriebs bewegen sich jedoch die einzelnen Komponenten, insbesondere des Kühlmittelkreislaufes mehr oder weniger unterschiedlich stark. Aufgrund dieser Relativbewegung der einzelnen Komponenten ist es notwendig, die einzelnen Komponenten des Kühlmittelkreislaufes flexibel miteinander zu verbinden, was gemäß dem Stand der Technik durch biegeweiche Schlauchstücke erfolgt. Hierzu müssen insbesondere die verwendeten Schlauchstücke ausreichend lang sein, um einerseits ein Knicken zu vermeiden und andererseits die durch die Bewegungen auf die Anschlusselemente der einzelnen Komponenten wirkenden Kräfte wenigstens teilweise zu reduzieren bzw. zu minimieren.

Solch eine Schlauchverbindung kann beispielsweise dadurch realisiert werden, dass insbesondere bei geringen Abständen der hydraulisch zu verbindenden Komponenten die Schläuche so lang gewählt werden, dass sie eine Schlaufe bilden, um einerseits die Bewegung zwischen den Komponenten zu kompensieren und andererseits ein Knicken der Schläuche vermieden wird.

Bei dieser im Stand der Technik bekannten Ausführungsform ist jedoch ein relativ großer Abstand zwischen den Anschlussstutzen der zu verbindenden Komponenten notwendig, um insbesondere die notwendige Bewegungsfreiheit des Schlauches zu gewährleisten. Probleme treten jedoch immer dann auf, wenn der zur Verfügung stehende Bauraum relativ gering ist oder weder ein großer Abstand der Komponenten vorhanden ist, noch ein in Schlaufenform angeordneter Schlauch verwendet werden kann. In solchen Fällen ist im Stand der Technik eine starre Verbindung der einzelnen Komponenten bekannt, wobei hiermit eine Relativbewegung zwischen den einzelnen Komponenten nicht kompensiert werden kann. Es ergeben sich mit dieser Verbindungsart insbesondere erhebliche konstruktive Einschränkungen bzw. Nachteile in der Wahl der zu verwendenden Materialien, um beispielsweise auch eine frühzeitige Materialermüdung wie beispielsweise Risse zu vermeiden.

Aufgabe der vorliegenden Erfindung ist es somit, ein Verbindungssystem für Kraftfahrzeuge zur Verfügung zu stellen, welches wenigstens teilweise die im Stand der Technik bekannten Nachteile reduziert und eine einfache Verbindungsmöglichkeit für wenigstens zweier Komponenten, insbesondere eines Kühlmittelkreislaufes für ein Kraftfahrzeug, bereit zu stellen.

Die Aufgabe wird durch eine Vorrichtung gemäß Anspruch 1 gelöst. Bevorzugte Ausführungsbeispiele sind Gegenstand der Unteransprüche. Ferner wird die Aufgabe durch die Verwendung der Vorrichtung gemäß Anspruch 17 und gemäß Anspruch 18 für ein Verfahren zur Herstellung einer Verbindungsvorrichtung zum Verbinden wenigstens zweier Strömungswege gelöst.

Die erfindungsgemäße Vorrichtung zum Verbinden wenigstens zweier Strömungswege eines Fluids, insbesondere für eine Kraftfahrzeug, weist wenigstens einen Zuführungsabschnitt und einen Abführungsabschnitt auf, die jeweils bevorzugt in Längsrichtung entlang einer Mittelachse fluiddurchströmt sind.

Ferner weist die Vorrichtung wenigstens einen Verbindungskörper auf, der wenigstens zwei zueinander anschließende, fluiddurchströmte Teilkörper aufweist. Diese sind bevorzugt wenigstens abschnittweise im wesentlichen axial zwischen wenigsten dem Zuführungsabschnitt und/oder dem Abführungsabschnitt angeordnet. Die erfindungsgemäße Vorrichtung ist dadurch gekennzeichnet, dass die durch den Zuführungsabschnitt und den Abführungsabschnitt sich erstreckenden Mittelachsen in wenigstens einem vorgegebenen Bereich voneinander getrennt ausgelenkt werden können.

Als Auslenkung wird gemäß der vorliegenden Erfindung eine Bewegung der Mittelachse verstanden, die beispielsweise radial und/oder aber auch in einem vorgegebenen Winkel um einen Drehpunkt erfolgen kann. Diese Auslenkungen können sowohl beim Verbinden zweier Komponenten über deren Zuführungs- bzw. Abführungsabschnitt auftreten oder aber durch eine relative Bewegung der beiden Komponenten insbesondere während des Fahrbetriebs eines Fahrzeuges.

Als Zuführungsabschnitt wird gemäß der vorliegenden Erfindung der Bereich einer Komponente, bevorzugt des Kühlmittelkreislaufes eines Kraftfahrzeuges, verstanden, die beispielsweise den Anschlussstutzen eine Verbindungsstelle für nachfolgende Komponenten bzw. für Leitungssysteme darstellt. Dem entsprechend wird ferner als Abführungsabschnitt wiederum ein Anschlussstutzen einer Komponente, vorzugsweise eines Kühlmittelkreislaufes, verstanden, mit welchen diese über eine Verbindung mit wenigstens einer weiteren Komponente fluidverbunden wird.

Als Fluide werden gemäß der vorliegenden Erfindung insbesondere Kühlmittel verstanden, welche vorzugsweise in Kühlmittelkreisläufen von Kraftfahrzeugen verwendet werden und einen vorgegebenen Wasseranteil aufweisen. Diese Fluide weisen in Abhängigkeit der Kühlmittelkreislaufposition unterschiedliche thermodynamische Zustände auf, wobei der Kühlmittelkreislauf so gestaltet ist, dass ein Entweichen des Kühlmittels weitgehend verhindert wird. Es liegt jedoch auch im Sinn der vorliegenden Erfindung, dass als Fluide auch alle anderen fließfähigen Medien verstanden werden, die insbesondere in Kraftfahrzeugen eingesetzt werden.

Als Mittelachse des fluiddurchströmten Zuführungsabschnitts bzw. des fluiddurchströmten Abführungsabschnitts wird gemäß der vorliegenden Erfindung eine Mittellinie verstanden, die beispielweise bei einem kreisrunden Strömungswegquerschnitt in dessen Symmetrieachse liegt. So werden gemäß der vorliegenden Erfindung die Mittelachsen durch den Zuführungsabschnitt einer ersten Komponente und durch die Mittelachse eines Abführungsabschnitts einer zweiten Komponente des Kühlmittelkreislaufes bestimmt, wobei deren Relativposition auch im Stillstand nicht axial fluchtend angeordnet sein müssen.

Gemäß einer besonders bevorzugten Ausführungsform weist der Zuführungsabschnitt und/oder der Abführungsabschnitt einen im wesentlichen kreisförmigen Querschnitt auf.

Gemäß einer weiteren besonders bevorzugten Ausführungsform wird der Verbindungskörper durch wenigsten zwei zueinander anschließende, fluiddurchströmte Teilkörper bereitgestellt. Es liegt jedoch auch im Sinne der vor liegenden Erfindung, dass mehrere fluiddurchströmte Teilkörper den Verbindungskörper bilden.

Der Verbindungskörper und/oder die Teilkörper der erfindungsgemäßen Vorrichtung weisen gemäß einer weiteren besonders bevorzugten Ausführungsform wenigstens ein Material auf, das aus einer Gruppe von Materialien ausgewählt ist, welche Metalle wie z.B. Aluminium, Stahl, Legierungen hiervon, synthetische oder natürliche Kunststoffe wie z.B. Polyurethan, PA, Polyvinylchlorid, Verbundwerkstoffe, faserverstärkte Kunststoffe, metallarmierte Kunststoffe, Kombinationen hieraus und dergleichen aufweist.

Gemäß einer weiteren besonders bevorzugten Ausführungsform werden mehrere Teilkörper und/oder der Verbindungskörper von wenigstens einer biegeelastischen Wandung wenigstens teilweise umhüllt.

Als biegeelastische Wandung wird gemäß der vorliegenden Erfindung vorzugsweise eine im wesentlichen flächige Form verstanden, die mit wenigstens einem Teilkörper fluiddicht verbunden ist.

Die biegeelastische Wandung der Vorrichtung weist gemäß einer besonders bevorzugten Ausführungsform wenigstens ein Material auf, das aus einer Gruppe von Materialien entnommen ist, welche synthetische oder natürliche Kunststoffe, wie beispielsweise Gummi, elastische Kunststoffe wie z.B. PA, Verbundwerkstoffe, faserverstärkte Kunststoffe, metallarmierte Kunststoffe, Polyurethane, Polyvinylchloride, Kombinationen hieraus und dergleichen aufweist.

Die biegeelastische Eigenschaft der Wandung wird gemäß einer weiteren besonders bevorzugten Ausführungsform durch die Materialeigenschaft der Wandung und/oder durch die Formgebung der Wandung erreicht. Bevorzugt dient die biegeelastische Wandung dazu, die wenigstens zwei Teilkörper des Verbindungskörpers fluiddicht miteinander zu verbinden und eine Auslenkung der Mittelachsen des Zuführungsabschnitts und des Abführungsabschnitts zu ermöglichen.

Gemäß einer weiteren besonders bevorzugten Ausführungsform sind ferner die Teilkörper mit jeweils einem Zuführungsabschnitt und/oder einem Abführungsabschnitt des Verbindungskörpers verbunden und weisen gemäß einer weiteren besonders bevorzugten Ausführungsform wenigstens in einem Abschnitt eine zu der Mittelachse im wesentliche parallelen Strömungsbereich für das Fluid auf.

Gemäß einer weiteren besonders bevorzugten Ausführungsform weist die biegeelastische Wandung im Querschnitt wenigstens einen wellenförmigen Abschnitt auf, der gemäß einer besonders bevorzugten Ausführungsform mit dem ersten Teilkörper, welcher in Verbindung mit dem Zuführungsabschnitt und mit einem zweiten Teilkörper des Verbindungskörpers, welcher in Verbindung mit dem Abführungsabschnitt steht, fluiddicht verbunden ist.

Gemäß einer weiteren besonders bevorzugten Ausführungsform sind die Teilkörper wenigstens abschnittsweise in der Form von Kugelsegmenten ausgebildet, wobei die Teilkörper wenigstens eine fluiddurchströmte Durchgangsöffnung aufweisen und gemäß einer bevorzugten Ausführungsform wenigstens teilweise von der biegeelastischen Wandung umschlossen werden.

In einer weitem bevorzugen Ausführungsform kann die Wandung, welche den Teilkörper wenigstens abschnittsweise umschließt auch starr sein.

Gemäß einer weiteren besonders bevorzugten Ausführungsform sind die Teilkörper des Verbindungskörpers in der Art angeordnet, dass insbesondere im nicht-eingebauten Zustand die Durchgangsöffnungen in einem vorgegebenen Bereich fluchtend hintereinander, das heißt in Reihe, angeordnet sind.

Gemäß einer weiteren besonders bevorzugten Ausführungsform weisen beide Teilkörper oder ein Teilkörper wenigstens abschnittsweise einen zylindrisch begrenzten Strömungsabschnitt auf, der gemäß einer weiteren besonders bevorzugten Ausführungsform zur Verbindung mit dem Zuführungsabschnitt und/oder dem Abführungsabschnitt dient. Hierbei kann dieser zylindrische Abschnitt eine zusätzliche Verbindungseinrichtung aufweisen, die insbesondere eine schnelle Kopplung mit dem Zuführungs- und/oder Abführungsabschnittes einer Komponente eines Kühlmittelkreislaufes bereitstellt.

Solch eine Verbindungseinrichtung umfasst insbesondere Kupplungen, Schellen, Arretierungsvorsprünge oder -nuten. Ferner kann die Verbindung aber auch im Spritzguss erzielt werden. Auch liegen beliebige Kombinationen dieser Anschlussmöglichkeiten in Sinne der vorliegenden Erfindung.

Gemäß einer weiteren besonders bevorzugten Ausführungsform weist die erfindungsgemäße Vorrichtung wenigstens einen biegeelastischen Abstandshalter auf, der insbesondere die Teilkörper des Verbindungskörpers miteinander verbindet. Solch ein Abstandshalter kann gemäß einer besonders bevorzugten Ausführungsform eine im wesentlichen rotationssymmetrische Grundform aufweisen, die bevorzugt eine vorgegebene Anzahl von Durchbrüchen aufweist und vom Fluid durchströmt wird. Ferner nehmen die Abstandshalter gemäß einer weiteren bevorzugten Ausführungsform Zugkräfte auf, wie sie beispielsweise durch den Innendruck erzeugt werden.

In Abhängigkeit der vorgegebenen Anzahl von Durchbrüchen ergeben sich unterschiedlich starke Stege, welche die wenigstens zwei Teilkörper des Verbindungskörpers mit einem vorgegebenen Abstand zueinander anordnen. Sie erlauben sowohl eine radiale Auslenkung, als auch eine bestimmte Winkelverschiebung der beiden Mittelachsen des Zuführungs- bzw. des Abführungsabschnittes.

Gemäß einer weiteren besonders bevorzugten Ausführungsform weist der Zuführungs- oder der Abführungsabschnitt Verbindungs- und/oder Abdichtelemente auf, die eine fluiddichte Verbindung mit der Umgebung des Kühlmittelkreislaufes bereitstellen. Solche Abdichtelemente können beispielsweise O-Ring-Dichtungen, Flachringdichtungen, Ringdichtungen, Kombinationen hieraus und dergleichen sein.

Die erfindungsgemäße Vorrichtung wird ferner gemäß Anspruch 17 insbesondere zum Verbinden von Strömungsverbindungen für den Wärmetransport in einem Kraftfahrzeug mit wenigstens einem Wärmetauscher, wenigstens einer Wärmequelle, wie beispielsweise einem Verbrennungsmotor, einer Pumpe zum Umwälzen des Kühlmittels, und Verbindungsleitungen zwischen den einzelnen Komponenten verwendet.

Die Erfindung umfasst ferner auch ein Verfahren zur Herstellung einer Vorrichtung zum Verbinden wenigstens zweier Strömungswege eines Fluids, gemäß wenigstens einem der Ansprüche 1 bis 17, insbesondere für Kraftfahrzeuge, welches dadurch gekennzeichnet ist, dass der Verbindungskörper, insbesondere die Teilkörper des Verbindungskörpers, mit wenigstens einer biegeelastischen Wandung fluiddicht umspritzt wird.

Bevorzugte Ausführungsformen der erfindungsgemäßen Vorrichtung werden nachfolgend an Hand verschiedener Ausführungsbeispiele erläutert. Es sei jedoch darauf hingewiesen, dass die nachfolgend dargestellten Ausführungsbeispiele nur einige Ausführungsformen der Erfindung wiedergeben und nicht die allgemein möglichen Gestaltungsformen für eine erfindungsgemäße Vorrichtung zum Verbinden von zwei Strömungswegen, insbesondere in Kraftfahrzeugen, einschränken oder ausschließen.

Ferner sei dennoch darauf hingewiesen, dass es insbesondere auch im Sinne der vorliegenden Erfindung ist, die hier dargestellten Ausführungsbeispiele untereinander zu kombinieren oder zu ergänzen.

So zeigt
- Fig. 1: die Hälfte eines schematisierten Wärmetauschers mit einem Verbindungsstutzen;
- Fig. 2: eine bevorzugte Ausführungsform des erfindungsgemäßen Verbindungskörpers im Querschnitt;
- Fig. 3: eine perspektivische Darstellung des Verbindungskörpers nach Fig. 2;
- Fig. 4.: eine perspektivische Schnittdarstellung des Verbindungskörpers nach Fig. 2;
- Fig. 5: eine alternative Ausführungsform eines erfindungsgemäßen Verbindungskörpers im Querschnitt
- Fig. 6: eine perspektivische Darstellung des Verbindungskörpers gemäß Fig. 5;
- Fig. 7: eine weitere alternative Ausführungsform eines erfindungsgemäßen Verbindungskörpers im Querschnitt;
- Fig. 8: eine perspektivische Darstellung des Verbindungskörpers gemäß Fig. 7;
- Fig. 9: eine geschnittene perspektivische Darstellung des Verbindungskörpers gemäß Fig. 7;
- Fig. 10: eine weitere alternative bevorzugte Ausführungsform eines Verbindungskörpers im Querschnitt;
- Fig. 11: eine perspektivische Darstellung des Verbindungskörpers gemäß Fig. 10;
- Fig. 12: eine teilweise geschnittene perspektivische Darstellung des Verbindungskörpers gemäß Fig. 10;
- Fig. 13: eine weitere bevorzugte Ausführungsform eines erfindungsgemäßen Verbindungskörpers im Querschnitt;
- Fig. 14: eine perspektivische Darstellung des Verbindungskörpers gemäß Fig. 13;
- Fig. 15: eine teilweise geschnittene perspektivische Darstellung des Verbindungskörpers gemäß Fig. 13;
- Fig. 16: eine perspektivische Darstellung eines weiteren bevorzugten Ausführungsbeispiels eines erfindungsgemäßen Verbindungskörpers;
- Fig. 17: Draufsicht auf einen Verbindungskörper gemäß Fig. 16;
- Fig. 18: eine Schnittdarstellung des Verbindungskörpers gemäß Fig. 16;
- Fig. 19: eine weitere Schnittdarstellung des Verbindungskörpers gemäß Fig. 16;
- Fig. 20: eine teilweise geschnittene perspektivische Darstellung des Verbindungskörpers gemäß Fig. 16.

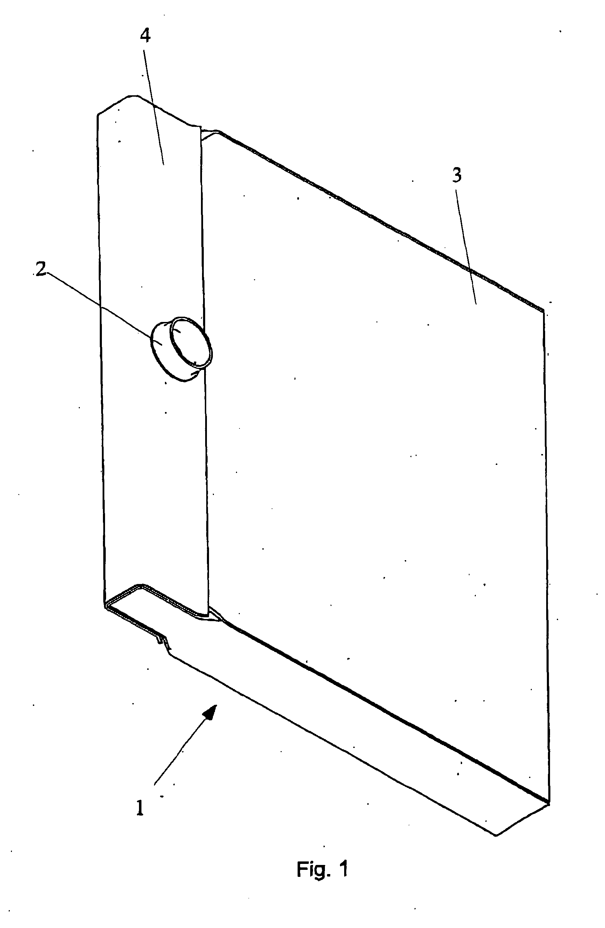

Fig. 1 zeigt einen Wärmetauscher 1, der einen Verbindungsstutzen 2 aufweist, an welchem gemäß der vorliegenden Erfindung der Verbindungskörper zur Verbindung wenigstens zweier Strömungswege eines Fluids angeordnet werden kann. Hierbei entspricht der Verbindungsstutzen beispielsweise einem Zuführungsabschnitt oder Abführungsabschnitt, der in diesem speziellen Fall in seiner Symmetrieachse eine gedachte Mittelachse aufweist, entlang welcher das Fluid abschnittsweise in Längsrichtung strömt.

Der Wärmetauscher der in Fig. 1 dargestellten Ausführungsform weist schematisch eine Wärmetauscherfläche (-netz) 3 und einen Wasserkasten (Kühlmittelkasten, Wärmetauscherkasten) 4 auf, wobei gemäß der hier dargestellten Ausführungsform nur einer von wenigstens zwei Verbindungsstutzen schematisiert dargestellt ist.

Der Vollständigkeit halber sei jedoch darauf hingewiesen, dass die hier dargestellte Form nur eine einer möglichen Vielzahl von Komponenten darstellt, die in einem Kühlmittelkreislauf, wie er im Stand der Technik bekannt ist, darstellt und insbesondere auch jegliche andere Form von fluiddurchströmten Bauteilen verwendet werden kann, die wenigstens einen Zuführungsabschnitt in Sinne beispielsweise eines Verbindungsstutzens und/oder einen Abführungsabschnitt im Sinne beispielsweise wenigstens eines zweiten Verbindungsstutzens aufweist.

Es liegt auch im Sinne der vorliegenden Erfindung, dass weitere Komponenten wie sie insbesondere in Kühlmittelkreislaufen aber auch in anderen fluiddurchströmten Systemen, insbesondere eines Kraftfahrzeuges verwendet werden, mit der vorliegenden Vorrichtung zum Verbinden wenigstens zweier Strömungswege ausgestattet werden.

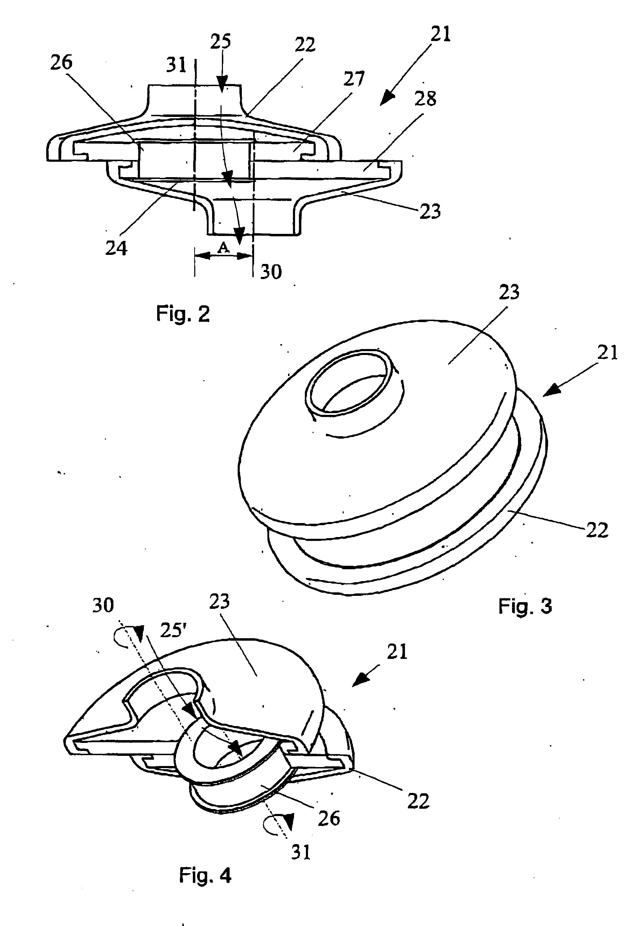

Fig. 2 zeigt eine erste mögliche Ausführungsform einer erfindungsgemäßen Vorrichtung zum Verbinden zweier Strömungswege. Zu erkennen ist der Verbindungskörper 21 welcher zwei Teilkörper 22 und 23 aufweist, und die über ein weiteren Teilkörper 24, der im Sinne eines Verbindungselements in die beiden Teilkörper 22 und 23 exzentrisch zu deren Rotationsachse eingreift, fluidverbunden werden. Das Fluid strömt beispielsweise über einen Zuführungsabschnitt (nicht dargestellt) in den ersten Teilkörper 22 (entlang der Pfeile 25) und wird über das Verbindungselement 24 in den zweiten Teilkörper 23 geführt. Über einen Abführabschnitt (nicht dargestellt) wird das Fluid aus dem Verbindungskörper abgeleitet.

Gemäß dem dargestellten Ausführungsbeispiel weist der erste Teilkörper wenigstens eine Öffnung 26 auf, die im wesentlichen axial zu der Rotationsachse angeordnet ist. Im Gegensatz hierzu weist der Teilkörper 23 in seiner Bodenfläche 28 eine um den Betrag A versetzte Öffnung auf, so dass die beiden Teilkörper 22 und 23 im Sinne einer exzentrischen Verbindung angeordnet sind. Das Verbindungselement 24 hat unter anderem die Aufgabe, die Bodenplatten 27 und 28 der beiden Teilkörper 22 und 23 derart miteinander zu verbinden, dass ein Entweichen des darin durchströmenden Fluids verhindert wird.

Es liegt auch im Sinn der vorliegenden Erfindung, dass die beiden Teilkörper im wesentlichen gleich gestaltet sind, und die Bodenplatten in den jeweiligen Teilkörpern (22, 23) drehbeweglich angeordnet sind. Somit kann eine Drehbeweglichkeit bzw. Verschiebbarkeit der Teilkörper zueinander realisiert werden, da insbesondere durch die Kombination von drei Drehachsen eine ebene Verschiebung realisierbar ist.

Hierzu kann beispielsweise das Verbindungselement Dichtelemente oder eine derartige Passung aufweisen, die in Zusammenwirkung mit den gewählten Materialeigenschaften die geforderten Dichtigkeitskriterien für den Einsatz in Kühlmittelkreisläufen von Kraftfahrzeugen bereitstellt.

Fig. 3 zeigt eine perspektivische Ansicht des Verbindungskörpers 21 mit dem ersten Teilkörper 22 und dem zweiten Teilkörper 23.

In der geschnittenen perspektivischen Darstellung gemäß Fig. 4 ist wiederum der erste Teilkörper 22 und der zweite Teilkörper 23 zu erkennen, wobei hieraus auch die Funktion des Verbindungselementes 24 in seiner Lage zu dem jeweiligen Teilkörper entnommen werden kann. Die Pfeile 25' symbolisieren wiederum den Strömungsweg für ein Fluid durch den Verbindungskörper. Ferner sind die gedachten Mittellinien 30, 31 für den Zuführungsabschnitt und den Abführungsabschnitt eingezeichnet.

Gemäß dem in den Fig. 2 bis 4 gezeigten Ausführungsbeispiel wird deutlich, dass bei einer drehbeweglichen Anordnung der beiden Teilkörper 22 und 23 eine radiale Verschiebung des Zuführungsabschnittes zum Abführungsabschnitt durch eine Relativbewegung zwischen den beiden Teilkörpern 22, 23 ermöglicht wird. Hierbei können sich die beiden Teilkörper über das Verbindungselement 26 zueinander verdrehen, wodurch eine Bewegung einer einzelnen Komponente des Kühlmittelkreislaufs in Bezug auf die jeweils strömungsverbundenen Komponenten kompensiert oder wenigstens teilweise ausgeglichen werden kann. Besonders von Vorteil ist hierbei, dass die durch die Relativbewegung auf die Anschlusselemente wirkenden Kräfte reduziert werden können.

Die durch die radiale Verdrehung der beiden Excenterscheiben auftretenden Axialkräfte werden durch die Anlaufflächen oder -nuten im Verbindungselement 24 aufgenommen. Gemäß einem besonders bevorzugten Ausführungsbeispiel ist die Drehung der beiden Excenter vorgegeben und liegt beispielsweise bei 45°. Hierdurch wird insbesondere ein Verklemmen verhindert. Ferner werden die Bewegungskräfte, die auf die Verbindungsvorrichtung wirken, möglichst klein gehalten.

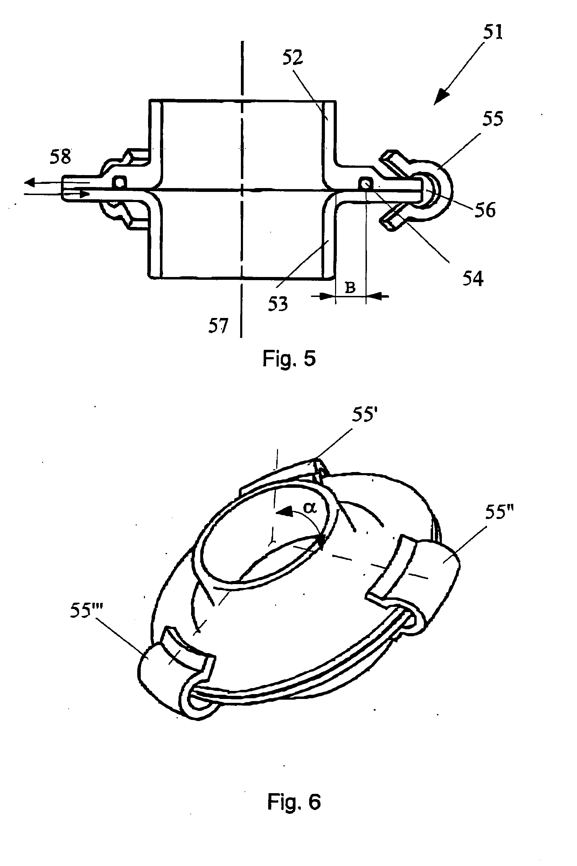

Fig. 5 zeigt eine alternative bevorzugte Ausführungsform der erfindungsgemäßen Vorrichtung, bei welcher der Verbindungskörper 51 zu erkennen ist, der im wesentlichen aus den beiden Teilkörpern 52 und 53 zusammengesetzt wird. Der Teilkörper 52 weist eine O-Ringdichtung 54 auf. Die beiden Teilkörper 52 und 53 sind über eine Spanneinrichtung 55 miteinander verbunden.

Die beiden Teilkörper und die Spanneinrichtung 55 mit den drei Elementen 55', 55" und 55'" ermöglichen es, dass sich die beiden Teilkörper 52 und 53 im wesentlichen senkrecht zu der eingezeichneten Mittelachse 57, wie durch die Pfeile 58 angedeutet, verschieben lassen. Dies erfolgt insbesondere dann, wenn über die nicht dargestellten Führungsabschnitte und/oder dem nicht dargestellten Abführungsabschnitt Querkräfte auftreten, die eine entsprechende Positionsveränderung der beiden Teilkörper relativ zueinander bewirkt. Begrenzt ist die Relativbewegung durch die Anordnung der Spannelemente 55', 55" und 55"', die auf Grund der zwischen den Teilkörpern und der Innenwandung der Spannelemente bestehenden Luft 56 die maximale Verschieblichkeit in wenigstens eine Richtung bestimmen. Durch den Versatz der Dichteinrichtung 54 in den mittleren Flanschbereichen der beiden Teilkörper, die gemäß dem hier dargestellten Ausführungsbeispiel im wesentlichen als Flächen ausgebildet sind, ist es möglich, einen maximalen Versatz der beiden Teilkörper bereitzustellen, der durch die äußerste Endlage der Dichteinrichtung 54 zu der gegenüberliegenden Innenwandung des Teilkörpers 53 bestimmt ist und, wie zuvor ausgeführt, durch den Abstand der Spanneinrichtung eingestellt werden kann.

Fig. 6 ist eine schematisierte perspektivische Ansicht der Vorrichtung gemäß dem Ausführungsbeispiel nach Fig. 5, wobei hierbei die Anordnung der drei Spannelemente 55', 55" und 55"' in einem Winkelversatz α von beispielsweise 120° erfolgt, wobei dies von der Zahl der Spannvorrichtungen im wesentlichen abhängt.

Zur Funktion sei angemerkt, dass die Oberflächen der Dichtflächen im wesentlichen senkrecht zu der Mittelachse angeordnet sind und zum Beispiel die Spanneinrichtungen, welche beispielsweise Halteklammern sein können, aufeinander gepresst werden. Die Axialkräfte werden entweder durch die Dichtflächen und/oder durch die Halteklammern aufgenommen.

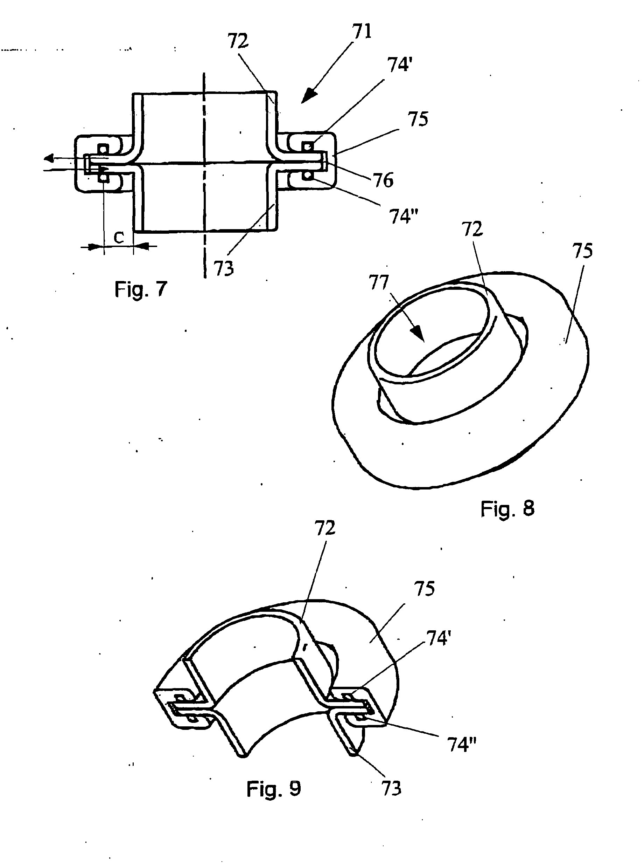

Fig. 7 zeigt eine weitere alternative Ausführungsform einer radial verschieblichen Vorrichtung zum Verbinden zweier Strömungsvorgänge, bei welcher die Dichtringe in der Spannvorrichtung respektive einer umlaufenden Halteklammer 75 integriert sind. Die beiden Teilkörper 72 und 73 sind über die vorzugsweise umlaufende Halteklammer gegeneinander verspannt.

Entsprechend den vorherigen Ausführungen wird eine radiale Relativverschiebung der beiden Teilkörper 72 und 73 durch den Spielraum 76 der Innenwandung der Halteklammer 75 und der äußeren Kontur der Teilkörper 72 und 73 bereitgestellt.

Fig. 8 zeigt eine perspektivische Darstellung der Verbindungsvorrichtung gemäß Fig. 7, wobei die wulstartige Halteklammer 75 und der Teilkörper 72 mit dessen Strömungsöffnung 77 zu erkennen sind.

Fig. 9 zeigt die geschnittene perspektivische Ansicht der Verbindungsvorrichtung gemäß Fig. 7, bei der neben der Halteklammer 75 die beiden Dichtelemente 74' und 74" und die beiden Teilkörper 72 und 73 zu erkennen sind.

In der dargestellten Ausführungsform sind die beiden Teilkörper axial fluchtend zueinander eingerichtet. Dies könnte beispielsweise der Zustand sein, in dem auch der Zuführungsabschnitt und der Abführungsabschnitt der jeweils zu verbindenden Komponenten fluchtend zueinander ausgerichtet sind.

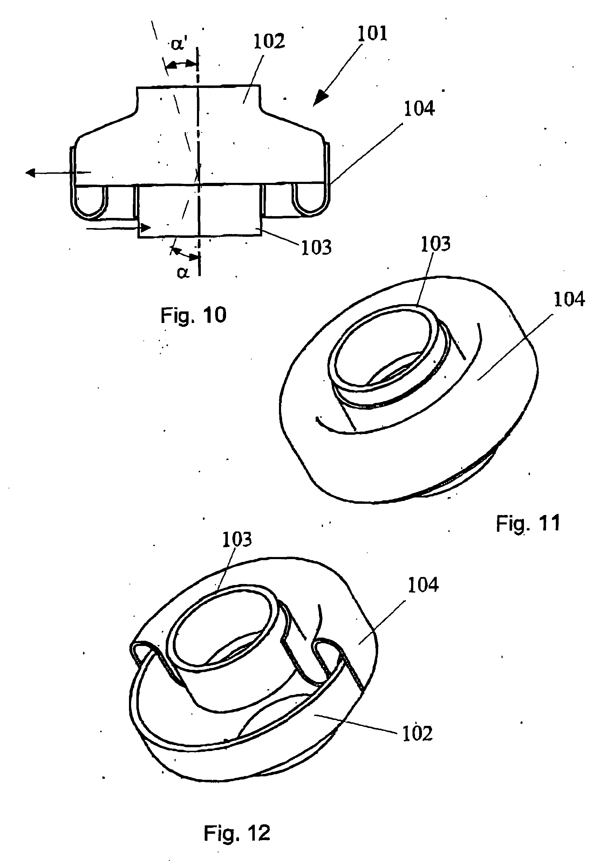

Fig. 10 zeigt eine weitere besonders bevorzugte Ausführungsform, bei welcher der Verbindungskörper 101, der erste Teilkörper 102 und der zweite Teilkörper 103 zu erkennen sind. Die beiden Teilkörper 102 und 103 sind mit einer Wandung 104 fluiddicht verbunden, wobei die Wandung, wie ansatzweise aus der Schnittdarstellung gemäß Fig. 10 und noch deutlicher aus der perspektivischen Schnittdarstellung gemäß Fig. 12 ersichtlich ist, mäanderförmig, hier mit zwei Wendepunkten, so angeordnet ist, dass sich daraus eine Art Faltenbalg zwischen dem äußeren Teilkörper 102 und dem inneren Teilkörper 103 bildet.

Das Fluid strömt gemäß der hier dargestellten Ausführungsform beispielsweise über einen Zuführungsabschnitt (nicht dargestellt), der sich im Anschluss an den ersten Teilkörper 102 erstreckt, in den Verbindungskörper ein und wird über die Öffnung des zweiten Teilkörpers 103 und den daran anschließenden Abführungsabschnittes (nicht dargestellt) in beispielsweise eine weitere Komponente eines Kühlmittelssystems abgeführt.

Fig. 11 zeigt den Verbindungskörper gemäß Fig. 10 in einer perspektivischen Ansicht von unten, bei der der erste Teilkörper 103 und insbesondere die Wandung 104 und deren Anordnung bezüglich des Teilkörpers 103 zu erkennen sind. Gemäß der hier dargestellten Ausführungsform weist der Teilkörper 103 eine im wesentlichen hohlzylindrische Form auf.

Der Teilkörper 102 weist auf dem dem Zuführungsabschnitt zugewandten Öffnungsbereich einen ersten Durchmesser und auf der gegenüberliegenden Seite einen zweiten Durchmesser auf, die gemäß dem dargestellten Ausführungsbeispiel mittels einer mehr oder minder stark geschwungenen Wandung verbunden sind. Es liegt selbstverständlich auch im Sinne der vorliegenden Erfindung, einen anderen Übergang oder auch gleiche Durchmesser zwischen den oberen und unteren Abschnitten der jeweiligen Teilkörper zu verwenden.

Die Relativposition zwischen den Teilkörper 103 und Teilkörper 102 wird gemäß dem hier dargestellten Ausführungsbeispiel im nicht-eingebauten Zustand durch die Form und Anordnung der Wandung bestimmt, wobei insbesondere aus der geschnittenen perspektivischen Darstellung gemäß Fig. 12 zu erkennen ist, dass axiale Positionsunterschiede zwischen einem Abführungsabschnitt, der sich an den Teilkörper 103, und dem Zuführungsabschnitt, der sich an den Teilkörper 112 anschließt, durch die Bewegungsfreiheit, die im wesentlichen durch die Gestalt und Elastizität der Wandung 104 bestimmt wird, ausgeglichen werden können.

Gemäß dem hier dargestellten Ausführungsbeispiel verlaufen die Falten der Wandung im wesentlichen senkrecht zur Achsrichtung einer gedachten Kreisscheibe in Umfangsrichtung und können somit insbesondere, jedoch nicht ausschließlich, radiale Bewegungen zwischen dem Zuführungsabschnitt und dem Abführungsabschnitt ausgleichen. Auch können gewisse Winkelverschiebungen α, α', wie sie in Fig. 10 dargestellt sind, kompensiert werden. Die Wandung 104 selbst besteht in dieser besonders bevorzugten Ausführungsform entweder aus Gummi oder aus einem entsprechenden elastischen Kunststoff, wie z.B. PA, mit dem der Faltenbalg gemäß einer weiter besonders bevorzugten Ausführungsform direkt gespritzt wird. Der Anschluss der Wandung an den beiden Teilkörpern 102 und 103 erfolgt entweder mit Kupplungen, Schellen, selbstarretierend in entsprechenden Nuten, oder aber wird in einem Stück an einen oder beide Teilkörper angespritzt. Auch beliebige Kombinationen dieser Anschlussmöglichkeiten sind möglich.

Die durch den Innendruck des Fluids auftretenden Axialkräfte, welche insbesondere auch auf die biegeelastische Wandung wirken, können gemäß einer weiteren besonders bevorzugten Ausführungsform entweder durch Zugstreben, Abstandshalter oder dergleichen innerhalb des Faltenbartes oder aber auch außerhalb des Faltenbartes (verformbare Zugstreben oder in ihren Lagern verdrehbare Zugstreben) oder durch eine entsprechende hakenförmige Geometrie, deren Flächen bei Bewegung aufeinander gleiten, aufgenommen werden.

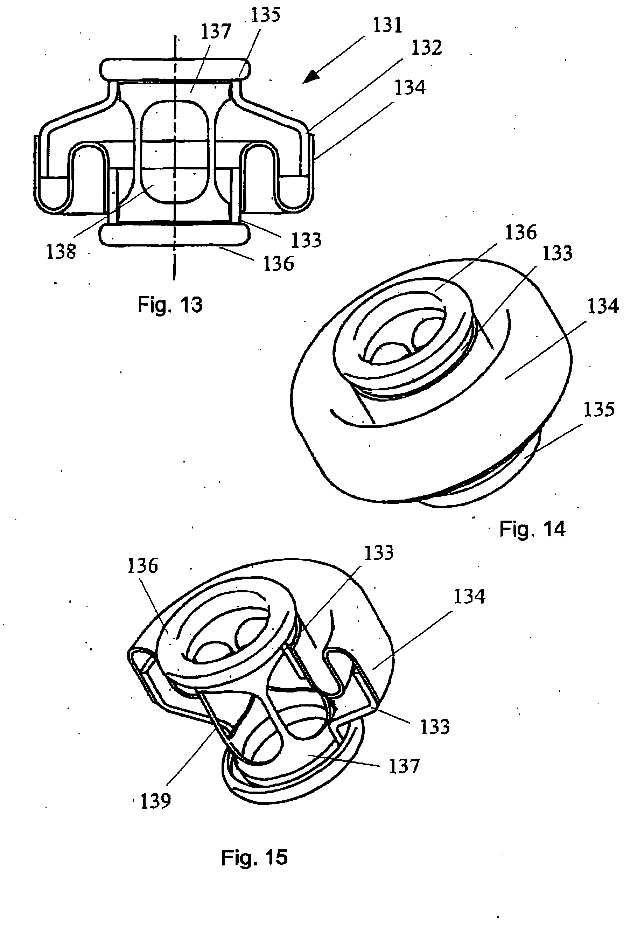

Solch eine Ausführungsform wird beispielsweise gemäß einer weiteren besonders bevorzugten Ausführungsform, die in den Figuren 13 - 15 gezeigt ist, näher erläutert.

Hierbei weist eine solche Vorrichtung wiederum einen ersten Teilkörper 132 und einen zweiten Teilkörper 133 auf, die über eine Wandung 134 miteinander verbunden sind. Die Ausführung entspricht im weitesten Sinne auch der Anordnung gemäß dem Ausführungsbeispiel aus den Figuren 10 - 12, wobei gemäß den hier dargestellten Ausführungsformen zusätzliche Ringwülste 135 und 136 an den beiden Teilkörpern angeordnet sind, die beispielsweise als Verbindungselemente zu dem fluiddurchströmten Zuführungsabschnitt oder Abführungsabschnitt (nicht dargestellt) dienen können und gemäß einer weiteren bevorzugten Ausführungsform Bestandteil des Abstandhalters 137 sind. Zwischen den beiden Ringwulsten 135 und 136 erstreckt sich ein Abstandselement 137, das gemäß der hier dargestellten Ausführungsform vier Ausnehmungen 138 aufweist, wodurch eine entsprechende Anzahl an Stegen 139 zur Verfügung steht, die einerseits den Abstand zwischen den beiden Teilkörpern 132 und 133 bestimmen können, und andererseits eine radiale und im bestimmten Umfang auch eine axiale Verschiebung bzw. Winkelveränderungen zwischen den Mittelachsen des Zuführungsabschnitts und des Abführungsabschnitts ermöglichen. Ferner ist es auch möglich, in gewissem Maß eine Verdrehung auszugleichen.

Fig. 14 zeigt eine perspektivische Darstellung der Verbindungsvorrichtung gemäß Fig. 13 von unten, bei der die ringförmigen Wulste 136 und 135 und insbesondere auch die Wandung 134 mit deren Anordnung an dem Teilkörper 133 zu erkennen ist.

Fig. 15 zeigt eine geschnittene perspektivische Ansicht der Verbindungsvorrichtung gemäß Fig. 13, bei der wiederum die jeweiligen Positionen sowohl des Abstandhalters 137, als auch der Teilkörper unter der Wandung zu erkennen sind.

Gemäß einer weiteren besonders bevorzugten Ausführungsform können auch die Abstandshalter über die Ringwulste mit den Teilkörpern 132 und 133 verbunden werden. Dies geschieht gemäß einer besonders bevorzugten Ausführungsform dadurch, dass solch ein Abstandhalter direkt auf die beiden oder einen der beiden Teilkörper angespritzt wird.

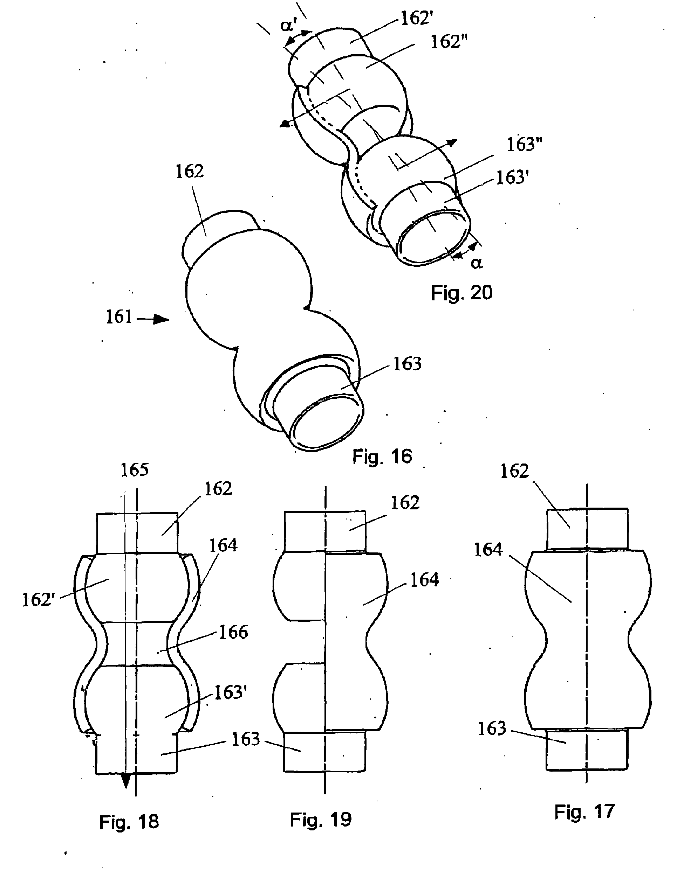

Fig. 16 zeigt perspektivisch eine weitere besonders bevorzugte Ausführungsform, wobei auch hier der Zuführungsabschnitt und der Abführungsabschnitt der jeweils zu verbindenden Komponenten nicht dargestellt sind. Zu erkennen ist im wesentlichen der Verbindungskörper 161 mit den beiden Teilkörpern 162 und 163. Die Durchströmung des Fluids erfolgt beispielsweise über die Durchgangsöffnung des ersten Teilkörpers 162 und verlässt die Verbindungsvorrichtung über die Öffnung des zweiten Teilkörpers 163.

In Fig. 17 ist die Verbindungsvorrichtung gemäß Fig. 16 als Draufsicht zu erkennen, wobei die äußere Wandung 164 zu erkennen ist, die die beiden Teilkörper 162 und 163 fluiddicht miteinander verbindet.

In Fig. 18 ist eine Schnittdarstellung des Verbindungskörpers gemäß Fig. 16 dargestellt, bei der neben der Wandung 164 auch die Kugelsegmente 162', 163' der jeweiligen Teilkörper 162 und 163 zu erkennen sind. Die beiden Teilkörper sind beabstandet voneinander angeordnet und werden über die Wandung 164 miteinander verbunden. Diese Beabstandung ist insbesondere auch der Fig. 19 zu entnehmen.

Gemäß einer besonders bevorzugten Ausführungsform können die Teilkörper 162 und 163 jeweils einstückig hergestellt werden oder auch aus Kombinationen mehrerer Einzelteile zusammengesetzt werden.

Die Fluiddurchströmung erfolgt gemäß dem hier dargestellten Ausführungsbeispiel entlang des Pfeils 165 über den ersten Teilkörper 162, den Zwischenbereich 166 und den zweiten Teilkörper 163. Aufgrund der gewählten konstruktiven Ausführungsform ist es möglich, dass die beiden Teilkörper 162 und 162 in einem gewissen Umfang getrennt voneinander ausgelenkt werden können, wodurch Positionsunterschiede sowohl beim Verbinden als auch im Betrieb von zwei Komponenten eines Kühlmittelkreislaufs, welche von einem Fluid durchströmt werden, ausgeglichen werden.

Ferner werden gemäß dem hier dargestellten Ausführungsbeispiel bevorzugt zwei kugelförmige Dichtflächen (162' und 163') verwendet. Die beiden Kugelsegmente sind gemäß der hier dargestellten Ausführungsform mit einem bestimmten Abstand zueinander angeordnet, der beispielsweise 20 mm betragen kann. Die Außenwandung 164, welche gemäß einer weiteren Ausführungsform auch mehrteilig ausgeführt werden kann, ist gemäß dem hier dargestellten Ausführungsbeispiel formschlüssig mit den Kugeln verbunden, wobei darauf hinzuweisen ist, dass auch andere Verbindungsarten zur fluiddichten Verbindung zwischen der Wandung 164 und den beiden Kugelabschnitten verwendet werden können, um entsprechend auftretende Axialkräfte aufzunehmen bzw. abzuleiten.

## Patentansprüche

1. Vorrichtung zum Verbinden wenigstens zweier Strömungswege eines Fluids für Kraftfahrzeuge mit
wenigstens jeweils einen in Längsrichtung entlang wenigstens einer Mittelachse (30, 31) fluiddurchströmbaren Zuführungsabschnitt und Abführungsabschnitt, und
wenigstens einem Verbindungskörper (21) mit wenigstens zwei zueinander anschließenden, fluiddurchströmbaren Teilkörpern (22, 23), die sich wenigstens abschnittsweise im wesentlichen axial zwischen wenigstens dem Zuführungsabschnitt und/oder dem Abführungsabschnitt erstrecken,
**dadurch gekennzeichnet, dass**
die durch den Zuführungsabschnitt und den Abführungsabschnitt sich erstreckenden Mittelachsen (30, 31) in einem vorgegebenen Bereich voneinander getrennt auslenkbar sind.

2. Vorrichtung gemäß Anspruch 1, **dadurch gekennzeichnet, dass**
der Zuführungsabschnitt und/oder der Abführungsabschnitt einen im wesentlichen kreisförmigen Querschnitt (2) aufweisen.

3. Vorrichtung gemäß wenigstens einem der vorstehenden Ansprüche,
**dadurch gekennzeichnet, dass**
wenigstens der Verbindungskörper (21) und/oder die Teilkörper (22, 23) wenigstens ein Material aufweisen, das aus einer Gruppe von Materialien ausgewählt ist, welche Metalle wie z.B. Aluminium, Stahl, Legierungen hiervon, synthetische und natürliche Kunststoffe wie z.B. Polyurethan, PA, PVC, Verbundwerkstoffe, faserverstärkte Kunststoffe, metallarmierte Kunststoffe, Kombinationen hieraus und dergleichen aufweist.

4. Vorrichtung gemäß wenigstens einem der vorstehenden Ansprüche,
**dadurch gekennzeichnet, dass**
die Auslenkung der Mittelachsen (39, 31) im wesentlichen durch die Drehung um wenigstens zwei, bevorzugt um drei Drehpunkte erfolgt.

5. Vorrichtung gemäß wenigstens einem der vorstehenden Ansprüche,
**dadurch gekennzeichnet, dass**
Verbindungskörper (101) und/oder die Teilkörper (102, 103) von wenigstens einer biegeelastischen Wandung (104) wenigstens teilweise aufgenommen sind.

6. Vorrichtung gemäß wenigstens einem der vorstehenden Ansprüche,
**dadurch gekennzeichnet, dass**
der Zuführungsabschnitt und/oder der Abführungsabschnitt und/oder der Verbindungskörper strukturierte Oberflächenabschnitte aufweist, welche auf der Außenseite und/oder Innenseite angeordnet sind.

7. Vorrichtung gemäß wenigstens einem der vorstehenden Ansprüche,
**dadurch gekennzeichnet, dass**
die Teilkörper (22, 23) des Verbindungskörpers beweglich insbesondere drehbeweglich miteinander verbunden sind.

8. Vorrichtung gemäß wenigstens Anspruch 7, **dadurch gekennzeichnet,**
**dass**
die Elemente der Vorrichtung mit wenigstens einer Verbindungsart verbunden sind, welche aus einer Gruppe von Verbindungen ausgewählt ist, welche stoffschlüssige, formschlüssige und kraftschlüssige Verbindungen wie beispielsweise Klebeverbindungen, Klemmverbindungen, Pressverbindungen, Flanschverbindungen, Kombinationen hieraus und dergleichen aufweist.

9. Vorrichtung gemäß wenigstens einem der vorstehenden Ansprüche,
**dadurch gekennzeichnet, dass**
die biegeelastische Wandung der Vorrichtung wenigstens ein Material aufweist, dass aus einer Gruppe von Materialien entnommen ist, welche synthetische und natürliche Kunststoffe, Gummi, elastische Kunststoffe wie z.B. PA, Verbundwerkstoffe, faserverstärkte Kunststoffe, metallarmierte Kunststoffe, Polyurethane, PVC, Kombinationen hieraus und dergleichen aufweist.

10. Vorrichtung gemäß wenigstens einem der vorstehenden Ansprüche,
**dadurch gekennzeichnet, dass**
die biegeelastische Wandung (104) durch die Materialeigenschaft der Wandung und/oder durch die Formgebung der Wandung ein Auslenkung der Mittelachsen des Zuführungsabschnitts und des Abführungsabschnitts wenigstens flüssigkeitsdicht ermöglicht.

11. Vorrichtung gemäß wenigstens einem der vorstehenden Ansprüche,
**dadurch gekennzeichnet, dass**
die biegeelastische Wandung (104) im Querschnitt wenigstens einen wellenförmigen Abschnitt aufweist.

12. Vorrichtung gemäß wenigstens einem der vorstehenden Ansprüche,
**dadurch gekennzeichnet, dass**
der Verbindungskörper (161), insbesondere die Teilkörper (162, 163) wenigstens ein Kugelsegmente (162', 163') aufweisen, welche wenigstens eine fluiddurchströmte Durchgangsöffnung hat und bevorzugt wenigstens teilweise von der biegeelastischen Wandung (164) umschlossen wird.

13. Vorrichtung gemäß wenigstens einem der vorstehenden Ansprüche,
**dadurch gekennzeichnet, dass**
die Verbindung zwischen den biegeelastischen Wandungen und/oder des Verbindungskörpers, insbesondere der Teilkörper und/oder des Abführungs- und/oder Zuführungsabschnittes wenigstens eine Dichtung, insbesondere eine Dichtung wie zum Beispiel eine O-Ringdichtung, Flachringdichtung, Labyrinthdichtung, Kombinationen hieraus und dergleichen aufweist.

14. Vorrichtung gemäß wenigstens einem der vorstehenden Ansprüche,
**dadurch gekennzeichnet, dass**
die Teilkörper (132, 133) des Verbindungskörpers (131) mit wenigstens einem biegeelastischen Abstandshalter (137) verbunden sind.

15. Vorrichtung gemäß wenigstens Anspruch 14, **dadurch gekennzeichnet, dass**
der Abstandshalter (137) eine im wesentlichen rotationssymmetrische Grundform aufweist und bevorzugt eine vorgegebene Anzahl von Durchbrüchen aufweist.

16. Vorrichtung gemäß wenigstens einem der vorstehenden Ansprüche,
**dadurch gekennzeichnet, dass**
der Zuführungs- und/oder der Abführungsabschnitt und/oder der Verbindungskörper der Vorrichtung wenigstens ein Verbindungs- und/oder Abdichtelement aufweist.

17. Verwendung der Vorrichtung gemäß wenigstens einem der vorstehenden Ansprüche zum Verbinden von Strömungswegen, insbesondere zum Verbinden von Strömungsverbindungen für den Wärmetransport in einem Kraftfahrzeug mit wenigstens einem Wärmetauscher und wenigstens einer Wärmequelle eine Pumpe und Verbindungsleitungen zwischen den einzelnen Komponenten vorzugsweise eines Kühlmittelkreislaufs aufweist.

18. Verfahren zur Herstellung einer Vorrichtung zum Verbinden wenigstens zweier Strömungswege eines Fluids, insbesondere für Kraftfahrzeuge,
**dadurch gekennzeichnet, dass**
der Verbindungskörper (101, 131, 161), insbesondere die Teilkörper (102, 132, 162, 103, 133, 163) mit wenigstens einer biegeelastischen Wandung (104, 134, 164) fluiddicht umspritzt werden.
